# EUROPÄISCHE PATENTSCHRIFT

(11) **EP 0 864 613 B1**
(45) Veröffentlichungstag und Bekanntmachung des Hinweises auf die Patenterteilung: **29.01.2003**
(21) Anmeldenummer: 98103703.9
(22) Anmeldetag: 03.03.1998
(51) Int. Cl.: C09B 5/62, C09B 67/22

(54) **Pigmentzubereitungen und Verfahren zu ihrer Herstellung**
Pigment composition and process for the manufacture thereof
Composition pigmentaire et son procédé de fabrication

(30) Priorität: 10.03.1997 DE 19709798
(43) Veröffentlichungstag der Anmeldung: 16.09.1998
(73) Patentinhaber: Clariant GmbH, 65929 Frankfurt am Main (DE)
(72) Erfinder: Urban, Manfred, 65205 Wiesbaden (DE); Schnaitmann, Dieter, Dr., 65817 Eppstein (DE); Haberlick, Margit, 65520 Bad Camberg (DE)

(56) Entgegenhaltungen:
- EP-A- 0 039 482
- EP-A- 0 140 688
- EP-A- 0 504 872
- EP-A- 0 807 668
- DE-B- 1 117 246
- GB-A- 2 071 683
- US-A- 4 762 569
- KAISER ET AL : "Synthese von nichtsymmetrisch substituierten Perylen-Fluoreszenzfarbstoffen" CHEMISCHE BERICHTE, Bd. 124, Nr. 3, 1991, Seiten 529-535, XP002110435 weinheim-de

## Beschreibung

Die vorliegende Erfindung betrifft neue Pigmentzubereitungen mit verbesserten coloristischen und rheologischen Eigenschaften sowie deren Herstellung und Verwendung zum Pigmentieren von hochmolekularen Materialien.

Pigmentzubereitungen sind Kombinationen von Pigmenten mit strukturell analogen Pigmentdispergatoren, die mit spezifisch wirksamen Gruppen substituiert sind. Pigmentdispergatoren werden den Pigmenten zugesetzt, um die Dispergierung in den Anwendungsmedien, insbesondere in Lacken, zu erleichtern und um die rheologischen und coloristischen Eigenschaften der Pigmente zu verbessern. Die Viskosität von auf diese Weise hochpigmentierten Lackkonzentraten (Millbase) ist niedrig, und eine Flockung der Pigmentteilchen tritt nicht auf.

Es gibt eine Vielzahl von Vorschlägen zur Verbesserung der rheologischen und coloristischen Eigenschaften von organischen Pigmenten durch Zusatz von Pigmentdispergatoren, die jedoch nicht immer zum erhofften Resultat führen.

Die EP-A-0 321 919 beschreibt die Herstellung von Pigmentzubereitungen durch Mischen der Basispigmente mit methylenimidazolylgruppenhaltigen Pigmentderivaten. Auf dem Gebiet der Perylenpigmente werden Pigmentzubereitungen erhalten, deren coloristische Eigenschaften nicht mehr den heutigen Anforderungen genügen.

Die DE-A-3 160 906 beschreibt die Herstellung von sulfonamidgruppenhaltigen Pigmentdispergatoren. Die dort beschriebenen Pigmentdispergatoren auf der Basis von Perylenverbindungen besitzen jedoch erhebliche coloristische und rheologische Mängel.

Die US-PS 4 762 569 beschreibt die Herstellung von Pigmentzubereitungen auf der Basis von symmetrischen Perylen-3,4,9,10-tetracarbonsäurediimiden. Diese Pigmentzubereitungen sind nur für den Einsatz in lösemittelhaltigen Systemen geeignet. Sie erfüllen nicht alle Anforderungen hinsichtlich der rheologischen und coloristischen Eigenschaften, die an Pigmentzubereitungen gestellt werden. Die coloristischen Eigenschaften sind insbesondere bei hohen Pigmentdispergatorgehalten nicht mehr ausreichend und in vielen Fällen ist ein deutlicher Glanzverlust und eine Farbtonabweichung feststellbar. Außerdem besitzen diese Pigmentdispergatoren eine ungenügende Lösemittel- und Überlackierechtheit, wodurch ihr Einsatz eingeschränkt ist.

Es bestand daher die Aufgabe, Pigmentzubereitungen zur Verfügung zu stellen, die die genannten Nachteile des Standes der Technik im Hinblick auf Coloristik, Rheologie und universelle Anwendbarkeit überwinden.

Es wurde gefunden, daß die Aufgabe überraschenderweise durch Pigmentzubereitungen gelöst wird, die neben dem Basispigment ein oder mehrere unsymmetrische Perylen-3,4,9,10-tetracarbonsäurediimide enthalten.

Gegenstand der Erfindung sind Pigmentzubereitungen, gekennzeichnet durch einen Gehalt an
a) mindestens einem organischen Pigment aus der Klasse der Perylen-, Perinon-, Chinacridon-, Azo-, Benzimidazolon-, Anthrachinon- oder Anthanthronpigmente und
b) mindestens einem Pigmentdispergator der allgemeinen Formel (I), 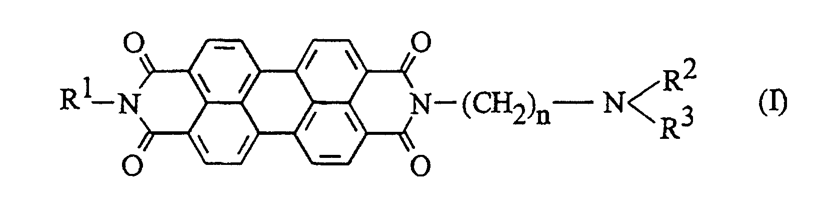
in welcher
- R¹: ein Wasserstoffatom, Hydroxy, Amino oder eine Alkylgruppe mit 1 bis 8 Kohlenstoffatomen, die durch 1 bis 4 Chlor- oder Bromatome, eine Phenyl-, Cyan-, Hydroxy-, Carbamoyl-, C₂-C₄-Acyl- oder C₁-C₄-Alkoxygruppe substituiert sein kann oder perfluoriert oder teilfluoriert ist;
- R² und R³: unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, C₂-C₄-Acyl oder C₁-C₄-Alkoxy sein und vorzugsweise 1 bis 4 an der Zahl sein können, oder R² und R³ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und
- n: eine Zahl von 1 bis 6 ist.

Bevorzugt im Sinne der vorliegenden Erfindung sind Pigmentdispergatoren der Formel (I), worin
- R¹: ein Wasserstoffatom, Benzyl, eine C₁-C₆-Alkylgruppe oder eine durch 1 bis 2 Substituenten aus der Gruppe Hydroxy, Acetyl, Methoxy, Ethoxy, Chlor und Brom substituierte C₂-C₆-Alkylgruppe;
- R² und R³: unabhängig voneinander ein Wasserstoffatom, eine C₁-C₆-Alkylgruppe, eine durch 1 bis 2 Substituenten aus der Gruppe Hydroxy, Acetyl, Methoxy, Ethoxy, Chlor und Brom substituierte C₁-C₆-Alkylgruppe, oder R² und R³ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden, und
- n: die Zahl 2 oder 3 ist.

Besonderes Interesse haben erfindungsgemäß Pigmentzubereitungen für nichtwäßrige Systeme erlangt, worin als Pigmentdispergator mindestens eine Perylenverbindung der allgemeinen Formel (I) enthalten ist, in welcher R¹ eine Methyl oder Ethyl, R² und R³ jeweils Methyl oder Ethyl darstellen und n die Zahl 3 ist.

Besonderes Interesse für wäßrige Systeme haben Pigmentzubereitungen erlangt, worin als Pigmentdispergator mindestens eine Perylenverbindung der allgemeinen Formel (I) enthalten ist, in welcher R¹ Wasserstoff oder eine Hydroxyethylengruppe, R² und R³ jeweils Methyl oder Ethyl darstellen und n die Zahl 3 ist, oder R² und R³ zusammen mit dem angrenzenden Stickstoffatom einen Imidazolylrest oder Morpholinylrest bilden und n die Zahl 3 ist .

Die erfindungsgemäß als Pigmentdispergator b) eingesetzten Perylenverbindungen der allgemeinen Formel I sind bekannte Verbindungen. Sie lassen sich beispielsweise gemäß der DE-A-3 017 185 durch Umsetzung von Perylen-3,4,9,10-tetracarbonsäuremonoanhydridmonoimiden der allgemeinen Formeln (II) bzw. (III) 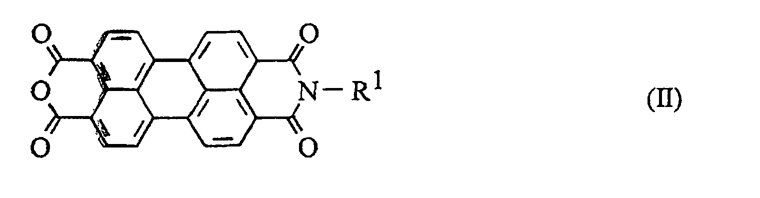 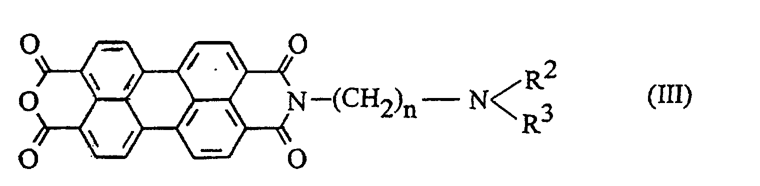 mit einem Amin der allgemeinen Formel (IV) bzw. (V)

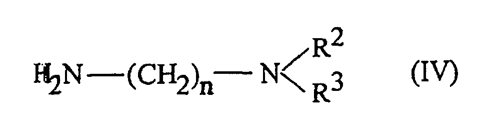

H₂N―R¹ (V)

und worin R¹, R², R³ und n die oben angegebenen Bedeutungen haben, herstellen, wobei entweder (II) mit (IV), oder (III) mit (V) umgesetzt werden, um zur Verbindung der Formel (I) zu gelangen.

Die Kondensation wird meist in wäßriger Lösung unter alkalischen pH-Bedingungen und bei Temperaturen im Bereich zwischen 50 und 180 °C durchgeführt. Zweckmäßig werden hierbei die Amine im Überschuß eingesetzt. Die Isolierung der gebildeten Verbindungen der Formel (I) aus dem Reaktionsgemisch erfolgt durch Filtration. Anstelle von in wäßrigem Medium kann die Kondensation der beiden Reaktionspartner auch im organischen oder im wäßrig-organischen Medium in inerten organischen Lösemitteln durchgeführt werden.

Als Amine der allgemeinen Formel (IV) können beispielsweise Dimethylaminoethylamin, Diethylaminoethylamin, 2-Ethylhexylaminoethylamin, Stearylaminoethylamin, Oleylaminoethylamin, Dimethylaminopropylamin, Dibutylaminopropylamin, Diethylaminobutylamin, Dimethylaminoamylamin, Diethylaminohexylamin, Piperidinomethylamin, Piperidinoethylamin, Piperidinopropylamin, Pipecolinoethylamin, Pipecolinopropylamin, Imidazolopropylamin, Morpholinoethylamin und Morpholinopropylamin eingesetzt werden.

Als Amine der allgemeinen Formel (V) können beispielsweise NH₃, Methylamin, Ethylamin, n-Propylamin, n-Butylamin, n-Hexylamin, β-Hydroxyethylamin, Hydroxylamin und Hydrazin eingesetzt werden.

Bevorzugte organische Pigmente im Sinne der vorliegenden Erfindung sind beispielsweise C.I. Pigment Red 123 (C.I. No. 71145), C.I. Pigment Red 149 (C.I. No. 71137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129); C.I. Pigment Orange 43 (C.I. No. 71 105), C.I. Pigment Red 194 (C.I. No. 71 100); C.I. Pigment Violet 19 (C.I. No. 73 900), C.I. Pigment Red 122 (C.I. No. 73 915); C.I. Pigment Red 209 (C.I. No. 73 905); C.I. Pigment Yellow 147, C.I. Pigment Red 168 (C.I. No. 59 300); C.I. Pigment Yellow 120 (C.I. No. 11 783); C.I. Pigment Yellow 151 (C.I. No. 13 980), C.I. Pigment Brown 25 (C.I. No. 12 510), C.I. Pigment Violet 32 (C.I. No. 12 517), C.I. Pigment Red 170 (C.I. No. 12 475), C.I. Pigment Orange 38 (C.I. No. 12 367), C.I. Pigment Red 188 (C.I. No. 12 467), C.I. Pigment Red 187 (C.I. No. 12 486), C.I. Pigment Orange 34 (C.I. No. 21 115), C.I. Pigment Orange 13 (C.I. No. 21 110), C.I. Pigment Red 9 (C.I. No. 12 460), C.I. Pigment Red 2 (C.I. No. 12 310), C.I. Pigment Red 112 (C.I. No. 12 340), C.I. Pigment Red 7 (C.I. No. 12 420), C.I. Pigment Red 210 (C.I. No. 12 477), C. I. Pigment Red 12 (C.I. No. 12 385).

Die Menge der Pigmentdispergatoren b) in den erfindungsgemäßen Pigmentzubereitungen sind, soweit die angestrebte Pigmentqualität nicht negativ beeinflußt wird, nicht beschränkt, doch kommt im allgemeinen ein Gehalt von 0,5 bis 20 Gew.-%, insbesondere von 1 bis 10 Gew.-% an Pigmentdispergator, berechnet auf das Gesamtgewicht der Pigmentzubereitung, in Betracht.

Die erfindungsgemäßen Pigmentzubereitungen können neben Pigment a) und Pigmentdispergator b) noch weitere Bestandteile enthalten, wie beispielsweise oberflächenaktive Mittel, Harze, Entschäumer, Antistaubmittel, Extender oder andere übliche Zusatzstoffe.

Pigmentzubereitungen im Sinne der vorliegenden Erfindung bestehen vorzugsweise aus
a) 99,5 bis 80 Gew.-% mindestens eines organischen Pigments aus der Klasse der Perylen-, Perinon-, Chinacridon-, Benzimidazolon-, Azo-, Anthrachinonoder Anthanthronpigmente,
b) 0,5 bis 20 Gew.-%, vorzugsweise 1 bis 10 Gew.-%, mindestens einer Perylenverbindung der Formel (I),
c) 0 bis 10 Gew.-% oberflächenaktiven Mitteln und
d) 0 bis 10 Gew.-% an üblichen Zusatzstoffen,
wobei die Anteile der jeweiligen Komponenten auf das Gesamtgewicht der Zubereitung (100 Gew.-%) bezogen sind.

Als oberflächenaktive Mittel kommen übliche anionische, kationische oder nichtionische Tenside in Betracht, beispielsweise anionaktive Substanzen wie Fettsäuretauride, Fettsäure-N-methyltauride, Fettsäureisethionate, Alkylbenzolsulfonate, Alkylnaphthalinsulfonate, Alkylphenolpolyglykolethersulfate und Fettalkoholpolyglykolethersulfate; Fettsäuren, z.B. Palmitin-, Stearin- und Ölsäure; Seifen, z.B. Alkalisalze von Fettsäuren, Naphthensäuren und Harzsäuren, z.B. Abietinsäure, alkalilöslische Harze, z.B. kolophoniummodifizierte Maleinatharze; kationaktive Substanzen, wie quarternäre Ammoniumsalze, Fettaminoxethylate, Fettaminpolyglykolether und Fettamine; nichtionogene Substanzen wie Fettalkoholpolyglykolether, Fettalkoholpolyglykolester und Alkylphenolpolyglykolether.

Als übliche Zusatzstoffe kommen beispielsweise Entschäumer, Extender, Füllstoffe, Stellmittel, Konservierungsmittel, Trocknungsverzögerungsmittel und schaumreduzierende Mittel in Betracht.

Die erfindungsgemäßen Pigmentzubereitungen sind in der Regel rieselfähige Pulver oder Granulate.

Der erfindungsgemäß erzielbare Dispergiereffekt beruht vermutlich auf einer Modifizierung der Oberflächenstruktur der organischen Pigmente a) mit den Perylenverbindungen der Formel (I). So ist in einigen Fällen die Wirksamkeit der Pigmentdispergatoren und die Qualität der damit erzeugten Pigmentzubereitungen abhängig vom Zeitpunkt der Zugabe des Dispergators im Herstellungsprozeß des organischen Pigments. Auch die Art und Weise der Applikation des Pigmentdispergators kann einen Einfluß haben.

Die erfindungsgemäßen Pigmentzubereitungen können sowohl Mischungen von mehreren, zweckmäßig zwei, organischen Pigmenten mit jeweils einem Pigmentdispergator, als auch Mischungen von einem organischen Pigment mit mehreren Pigmentdispergatoren sein.

Gegenstand der Erfindung ist auch ein Verfahren zur Herstellung einer erfindungsgemäßen Pigmentzubereitung, dadurch gekennzeichnet, daß man den Pigmentdispergator und das organische Pigment an einem beliebigen Zeitpunkt ihres Herstellungsprozesses aufeinander einwirken läßt.

Der Herstellungsprozeß eines organischen Pigments umfaßt dessen Synthese, gegebenenfalls Feinverteilung, z.B. durch Mahlung oder Umfällen, gegebenenfalls Lösemittelfinish, sowie die Isolierung als Preßkuchen oder als trockenes Pulver. Beispielsweise können die Pigmentdispergatoren vor oder während der Pigmentsynthese, vor oder während eines Feinverteilungsprozesses oder einer anschließenden Lösemittelbehandlung (Finish) zugegeben werden. Dabei können Temperaturen von 0 bis 200 °C auftreten. Selbstverständlich kann der Pigmentdispergator auch in Teilportionen zu unterschiedlichen Zeiten zugegeben werden.

Die Zugabe im Rahmen eines Feinverteilungsprozesses erfolgt beispielsweise im Verlauf einer Trockenmahlung des Rohpigments mit oder ohne zusätzliche Mahlhilfsmittel auf einer Roll- oder Schwingmühle, oder im Zuge einer Naßmahlung des Rohpigments in wäßrigem, wäßrig-organischem oder organischem Mahlmedium, beispielsweise auf einer Perlmühle.

Gleichfalls bewährt hat sich die Zugabe der Pigmentdispergatoren vor oder während eines Finishs für das organische Pigment in wäßrigem, wäßrig-alkalischem, wäßrig-organischem oder organischem Medium.

Die Pigmentdispergatoren können auch dem wasserfeuchten Pigmentpreßkuchen vor der Trocknung zugesetzt und eingearbeitet werden, wobei der Pigmentdispergator selbst ebenfalls als Preßkuchen vorliegen kann.

Es ist weiterhin möglich, Trockenmischungen von pulverförmigen Pigmentdispergatoren mit dem Pigmentpulver vorzunehmen.

Weiterhin ist es möglich, Pigmentdispergator und ein Perylenpigment durch Umsetzung mit demselben Amin der Formel (IV) oder (V) als Mischung zu synthetisieren.

Es war überraschend und nicht vorhersehbar, daß die unsymmetrischen Perylen-3,4,9,10-tetracarbonsäurediimide hervorragende und überlegene Pigmentdispergatoreigenschaften besitzen, da sie gegenüber den in der US-PS 4 762 569 aufgeführten Pigmentdispergatoren nur eine basische Gruppe pro Molekül besitzen und normalerweise bei Erniedrigung der Anzahl der basischen Gruppen die Wirksamkeit der Pigmentdispergatoren abnimmt. Außerdem besitzen die erfindungsgemäß verwendeten Pigmentdispergatoren verbesserte Echtheiten und sind für den Einsatz sowohl in lösemittelhaltigen als auch in wäßrigen Systemen geeignet.

Die nach der vorliegenden Erfindung erhältlichen Pigmentzubereitungen zeichnen sich aus durch ihre hervorragenden coloristischen und rheologischen Eigenschaften, insbesondere durch eine hohe Flockungsstabilität, eine leichte Dispergierbarkeit, ein gutes Glanzverhalten und eine hohe Farbstärke.

Die erfindungsgemäß hergestellten Pigmentzubereitungen lassen sich zum Pigmentieren (Einfärben) von hochmolekularen organischen Materialien natürlicher oder synthetischer Herkunft einsetzen.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Verschnitt oder in Form von Präparationen oder Dispersionen zu benutzen. Bezogen auf das zu pigmentierende, hochmolekulare organische Material setzt man die erfindungsgemäßen Pigmentzubereitungen in einer Menge von vorzugsweise 0,1 bis 10 Gew.-% ein.

Es ist auch möglich, daß erst im Anwendungsmedium der Pigmentdispergator dem Pigment, oder umgekehrt, zugegeben wird. Gegenstand der Erfindung ist daher auch eine Pigmentpräparation, bestehend im wesentlichen aus dem besagten organischen Pigment, dem besagten Pigmentdispergator, dem besagten hochmolekularen organischen Material, insbesondere Lack, gegebenenfalls oberflächenaktiven Mittel und/oder weiteren üblichen Zusatzstoffen. Die Gesamtmenge an organischem Pigment plus Pigmentdispergator ist vorzugsweise 1 bis 10 Gew.-%, bezogen auf das Gesamtgewicht der Pigmentpräparation.

Zur Beurteilung der Eigenschaften der nach der Erfindung hergestellten Pigmentzubereitungen auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes, ein High-Solid-Acrylharzeinbrennlack auf Basis einer nichtwäßrigen Dispersion (HS) sowie ein wäßriger Lack auf Polyurethanbasis (PUR) ausgewählt.

Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Bestimmung der Lösemittelechtheit erfolgte nach DIN 55976.
Die Bestimmung der Überlackierechtheit erfolgte nach DIN 53221.
Die Bestimmung der Kristallphase der Pigmente und Pigmentzubereitungen erfolgte durch Röntgenspektroskopie. Die Aufnahme der Röntgenspektren erfolgte mit Cu Kα-Strahlung.

In den nachfolgenden Beispielen beziehen sich Teile jeweils auf Gewichtsteile und Prozente jeweils auf Gewichtsprozente der so beschriebenen Substanzen.

### Beispiel 1

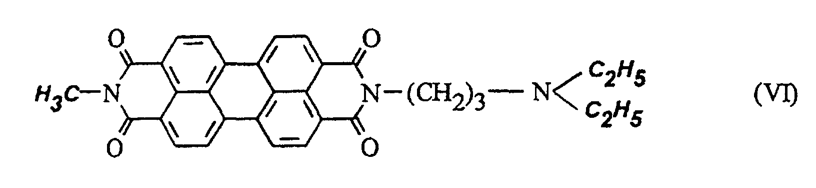

In einem Autoklaven werden 360 Teile Wasser vorgelegt, 24,3 Teile Perylen-3,4,9,10-tetracarbonsäuremonoanhydridmonomethylimid eingetragen und 31,2 Teile N,N-Diethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt, mit Wasser neutral gewaschen und bei 80 °C getrocknet.
Man erhält 27,4 Teile Pigmentdispergator der Formel (VI).

| | | | | |
|---|---|---|---|---|
| Analyse | Ber.: 74,3 %C, | 5,2 %H, | 8,1 %N, | 12,4 %O |
| | Gef.: 73,4 %C, | 5,0 %H, | 8,1 %N, | 12,4 %O |

Das ¹H- und das ¹³C- NMR-Spektrum stimmen mit der oben angegebenen Strukturformel überein.

### Beispiel 1a

In einem Rührgefäß werden 3000 Teile Wasser vorgelegt und unter Rühren 540 Teile eines 27,8 %igen Filterkuchens von Perylen-3,4,9,10-tetracarbonsäuredianhydrid eingetragen. Zu dieser Suspension werden 16 Teile einer handelsüblichen 50 %igen wäßrigen Harzseife gegeben und, nach Abkühlung auf 0 bis 5 °C, während 10 Minuten 222 Teile einer 45,5 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung aus 84,9 Teilen wasserfreiem Calciumchlorid in 250 Teilen Wasser zugetropft und 1 Stunde bei 0 bis 5 °C gerührt. Die Suspension wird auf 80 °C erhitzt und 1 Stunde bei 80 °C bis zur Beendigung der Ringschlußreaktion gerührt. Danach wird eine Suspension aus 8 Teilen Distearyldimethylammoniumchlorid und 350 Teilen Wasser zugetropft und eine Stunde bei 80 °C gerührt. Nach dem Abkühlen auf 50 °C wird bei dieser Temperatur 98 %ige Ameisensäure zugetropft, bis ein pH-Wert von 7 erreicht ist. Es wird 1/2 Stunde bei 50 °C gerührt, das erhaltene Pigment abgesaugt, mit Wasser chlorionenfrei gewaschen und bei 80 °C im Umluftschrank getrocknet.
Man erhält 172,3 Teile C.I. Pigment Red 179 (C.I. No. 71 130).
19 Teile des obigen Pigments werden mit 1 Teil Pigmentdispergator der Formel (VI), hergestellt gemäß Beispiel 1, mechanisch gemischt.

Man erhält eine Pigmentzubereitung, die im AM-Lack transparente und farbstarke Lackierungen liefert. Die Rheologie wird mit 5 bewertet und die Viskosität beträgt 13,6 s. Die Überlackierechtheit und die Lösemittelechtheit sind sehr gut.

Ohne den Zusatz des Pigmentdispergators sind die Lackierungen deutlich farbschwächer. Die Rheologie wird mit 1 bewertet und die Viskosität ist so hoch, daß sie mit dem Viskospatel nicht meßbar ist.

### Beispiel 1b (Vergleichsbeispiel)

19 Teile des obigen Pigments werden mit 1 Teil Pigmentdispergator, hergestellt gemäß Beispiel 1 der US-PS 4 762 569, mechanisch gemischt.

Man erhält eine Pigmentzubereitung, die im AM-Lack zwar transparente und farbstarke Lackierungen liefert, aber deren Überlackierechtheit und Lösemittelechtheit ungenügend sind. Die Volltonlackierung besitzt einen deutlichen Glanzschleier. Wegen der coloristischen Mängel ist diese Pigmentzubereitung derjenigen aus Beispiel 1a deutlich unterlegen.

### Beispiel 1c

### Ringschluß und Hydrolyse:

150 Teile 2,5-Dianilinoterephthalsäure werden unter Rühren bei 80 bis 90 °C in 750 Teile Polyphosphorsäure, die >84 % P₂O₅ enthält, eingetragen und 1 Stunde auf 125 °C erhitzt, wobei der Ringschluß zum Chinacridon erfolgt. Danach wird das Reaktionsgemisch unter Rühren mit 3375 Teilen Phosphorsäure 13,9 %ig mit einer Temperatur von 80 °C hydrolysiert. Dabei steigt die Temperatur auf 105 °C an. Es wird 1 Stunde bei 105 °C gerührt. Danach wird das Rohpigment abgesaugt und neutral gewaschen.
Man erhält 734 Teile eines 18,0 %igen Rohpigment-Filterkuchens, der überwiegend in der α-Phase vorliegt.

### Phasenumwandlung:

694,5 Teile des Rohpigment-Filterkuchens werden in ein Rührgefäß eingefüllt, 680,5 Teile Wasser, 12,9 Teile Natriumhydroxid (98 %ig) und 375 Teile Isobutanol (100 %ig) zugegeben und 5 Stunden auf 150 °C unter Druck erhitzt.

Nach dem Abkühlen auf 90 °C wird das Isobutanol bis 100 °C am Übergang azeotrop abdestilliert. Die Suspension wird auf 60 °C abgekühlt, das Rohpigment abgesaugt, mit Wasser neutral gewaschen und bei 80 °C getrocknet.
Man erhält 115,7 Teile hochkristallines Rohpigment, das in der β-Phase vorliegt.

### Mahlung:

In eine Rührwerkskugelmühle (Typ PML, Hersteller: Draiswerke GmbH, Mannheim), die mit 354 Teilen Zirkonmischoxidperlen vom Durchmesser 0,3-0,4 mm als Mahlkörper gefüllt ist, wird eine Suspension, bestehend aus 77 Teilen Natronlauge 1 %ig, 6,3 Teilen des vorstehend beschriebenen grobkristallinen Chinacridonrohpigments (β-Phase) und 0,32 Teilen Pigmentdispergator der Formel (VI), hergestellt gemäß Beispiel 1, eindosiert und mit einer Rührwerksumfangsgeschwindigkeit von 15,6 m/s sowie einer spezifischen Leistungsdichte von 3,1 kW pro Liter Mahlraum 15 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet.

Man erhält 6,2 Teile Pigmentzubereitung auf Basis von Pigment C.I. Violet 19 (C.I. No. 73 900), die im AM-Lack transparente und farbstarke Lackierungen mit tiefem Farbton liefert. Die Rheologie wird mit 5 bewertet. Die Viskosität beträgt 3,1 s und die Glanzmessung ergibt den Wert 78.

Ohne den Zusatz des Pigmentdispergators sind die Lackierungen deutlich heller und farbschwächer.

### Beispiel 1d:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71 137) (hergestellt gemäß der DE-A-1 067 157), 150 Teile wasserfreies Natriumsulfat und 1,6 Teile Pigmentdispergator der Formel (VI), hergestellt gemäß Beispiel 1, eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Anschließend wird das Mahlgut von den Mahlkörpern abgesiebt. Das Mahlgut wird in 1500 Teile Wasser eingetragen und 1 Stunde bei 80 °C gerührt. Danach wird die Pigmentzubereitung abgesaugt, mit Wasser salzfrei gewaschen und bei 80 °C getrocknet.

Man erhält 27,8 Teile Pigmentzubereitung auf Basis von C.I. Pigment Red 149. Im AM-Lack werden transparente und farbstarke Lackierungen erhalten. Die Überlackierechtheit ist sehr gut.

### Beispiel 1e

4,5 Teile des Chinacridonpigments C.I. Pigment Red 122 (C.I. No. 73 915) werden mit 0,045 Teilen Pigmentdispergator der Formel (VI), hergestellt gemäß Beispiel 1, mechanisch gemischt.

Man erhält eine Pigmentzubereitung, die im AM-Lack transparente und farbstarke Lackierungen liefert. Die Rheologie wird mit 5 bewertet und die Viskosität beträgt 4,9 s. Die Überlackierechtheit ist sehr gut.

### Beispiel 1f

9,5 Teile des Perylenpigments C.I. Pigment Red 149 (C.I. No. 71 137) werden mit 0,5 Teilen Pigmentdispergator der Formel (VI), hergestellt gemäß Beispiel 1, mechanisch gemischt.

Man erhält eine Pigmentzubereitung, die im AM-Lack transparente und farbstarke Lackierungen liefert. Die Viskosität beträgt 9,5 s. Die Glanzmessung ergibt den Wert 91.

Ohne den Zusatz des Pigmentdispergators sind die Lackierungen deckender, heller und farbschwächer und die Glanzmessung ergibt den Wert 7. Die Viskosität beträgt 33,1 s.

### Beispiel 1g (Vergleichsbeispiel)

9,5 Teile des Perylenpigments C.I. Pigment Red 149 werden mit 0,5 Teilen Pigmentdispergator, hergestellt gemäß Beispiel 1 der US-PS 4 762 569, mechanisch gemischt.

Man erhält eine Pigmentzubereitung, deren Rheologie im AM-Lack mit 1 bewertet wird und deren Viskosität 120 s beträgt. Die Glanzmessung ergibt den Wert 5. Diese Pigmentzubereitung ist in ihren coloristischen und rheologischen Eigenschaften derjenigen gemäß Beispiel 1 f deutlich unterlegen.

### Beispiel 1h

9,5 Teile des Perylenpigments C.I. Pigment Red 224 (C.I. No. 71 127) werden mit 0,5 Teilen Pigmentdispergator der Formel (VI), hergestellt gemäß Beispiel 1, mechanisch gemischt.

Man erhält eine Pigmentzubereitung, die im AM-Lack transparente und farbstarke Lackierungen mit tiefem Farbton liefert. Die Rheologie wird mit 5 bewertet und die Viskosität beträgt 2,8 s.

### Beispiel 1i

4,75 Teile des Benzimidazolon-Pigments C.I. Pigment Violet 32 (C.I. 12 517) werden mit 0,25 Teilen Pigmentdispergator der Formel (VI), hergestellt gemäß Beispiel 1, mechanisch gemischt.

Man erhält eine Pigmentzubereitung, die im AM-Lack transparente und farbstarke Lackierungen liefert. Die Rheologie wird mit 5 bewertet und die Viskosität beträgt 3,7 s.

Ohne den Zusatz des Pigmentdispergators sind die Lackierungen deutlich deckender, heller, farbschwächer und stark geflockt.

### Beispiel 1j

19,5 Teile des Anthanthron-Pigments C.I. Pigment Red 168 (C.I. No. 59 300) werden mit 0,5 Teilen Pigmentdispergator der Formel (VI), hergestellt gemäß Beispiel 1, mechanisch gemischt.

Man erhält eine Pigmentzubereitung, die im AM-Lack transparente und farbstarke Lackierungen liefert. Die Rheologie wird mit 5 bewertet und die Viskosität beträgt 3,3 s.

Ohne den Zusatz des Pigmentdispergators sind die Lackierungen deutlich deckender, heller und farbschwächer.

### Beispiel 1k

9,5 Teile des Benzimidazolon-Pigments C.I. Pigment Brown 25 (C.I. No. 12 510) werden mit 0,5 Teilen Pigmentdispergator der Formel (VI), hergestellt gemäß Beispiel 1, mechanisch gemischt.

Man erhält eine Pigmentzubereitung, die im AM-Lack transparente und farbstarke Lackierungen liefert. Die Viskosität beträgt 5,2 s. Ohne den Zusatz des Pigmentdispergators sind die Lackierungen deutlich farbschwächer.

### Beispiel 1I

9,5 Teile des Perinonpigments C.I. Pigment Red 194 (C.I. No. 71 100) werden mit 0,5 Teilen Pigmentdispergator der Formel (VI), hergestellt gemäß Beispiel 1, mechanisch gemischt.

Man erhält eine Pigmentzubereitung, die im AM-Lack deckende und farbstarke Lackierungen liefert. Die Rheologie wird mit 5 bewertet und die Viskosität beträgt 3,7 s.

### Beispiel 2

In einem Rührgefäß werden 400 Teile o-Dichlorbenzol vorgelegt, 40,5 Teile Perylen-3,4,9,10-tetracarbonsäuremonoanhydridmonomethylimid eingetragen und 52,1 Teile N,N-Diethylaminopropylamin zugegeben. Anschließend wird auf 150 °C erhitzt und 5 Stunden bei 150 °C gerührt. Danach wird auf 100 °C abgekühlt und das o-Dichlorbenzol mit Wasserdampf abdestilliert. Nach dem Abkühlen auf 60 °C wird der Pigmentdispergator abgesaugt, mit Wasser neutral gewaschen und bei 80 °C getrocknet.
Man erhält 50,6 Teile Pigmentdispergator der Formel (VI).

| | |
|---|---|
| Analyse | Ber.: 8,1 %N |
| | Gef.: 8,1 %N |

### Beispiel 2a

18 Teile Pigment, hergestellt gemäß Beispiel 1a, werden mit 2 Teilen Pigmentdispergator der Formel (VI), hergestellt gemäß Beispiel 2, mechanisch gemischt.

Man erhält eine Pigmentzubereitung auf Basis von C.I. Pigment Red 179, die im AM-Lack transparente und farbstarke Lackierungen liefert. Die Rheologie wird mit 5 bewertet und die Viskosität beträgt 5,2 s. Die Überlackierechtheit und die Lösemittelechtheit sind sehr gut.

Ohne den Zusatz des Pigmentdispergators sind die Lackierungen deutlich farbschwächer. Die Rheologie wird mit 1 bewertet und die Viskosität ist so hoch, daß sie mit dem Viskospatel nicht meßbar ist.

### Beispiel 3

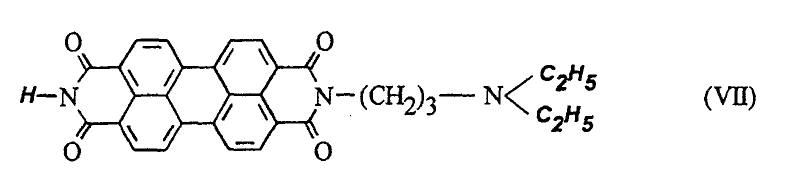

In einem Autoklaven werden 300 Teile Wasser vorgelegt, 15,6 Teile Perylen-3,4,9,10-tetracarbonsäuremonoanhydridmonoimid eingetragen und 20,8 Teile N,N-Diethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt, mit Wasser neutral gewaschen und bei 80 °C getrocknet.

Man erhält 18,1 Teile Pigmentdispergator der Formel (VII).

| | | | | |
|---|---|---|---|---|
| Analyse: | Ber.: 74,0 %C, | 5,0 %H, | 8,3 %N, | 12,7 %O |
| | Gef.: 73,9 %C, | 5,4 %H, | 8,4 %N, | 13,1 %O |

### Beispiel 3a

9,5 Teile des Chinacridon-Pigments C.I. Pigment Violet 19 (C.I. No. 73 900) werden mit 0,5 Teilen Pigmentdispergator der Formel (VII), hergestellt gemäß Beispiel 3, mechanisch gemischt.

Man erhält eine Pigmentzubereitung, die im AM-Lack transparente und farbstarke Lackierungen liefert. Die Rheologie wird mit 5 bewertet und die Viskosität beträgt 4,0 s.

### Beispiel 4

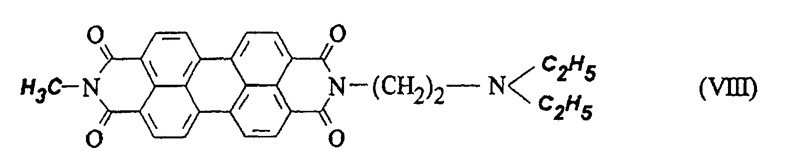

In einem Rührgefäß werden 150 Teile N,N-Diethylaminoethylamin vorgelegt und 10,1 Teile Perylen-3,4,9,10-tetracarbonsäuremonoanhydridmonomethylimid eingetragen. Anschließend wird auf 140 °C erhitzt und 2 Stunden bei 140 °C gerührt. Nach dem Abkühlen auf 25 °C werden 100 Teile Wasser zugegeben, der Pigmentdispergator abgesaugt und mit Wasser neutral gewaschen. Der Filterkuchen wird in 200 Teile 1 %ige Kalilauge eingetragen, auf 90 °C erhitzt und 1 Stunde bei dieser Temperatur gerührt. Danach wird bei 90 °C abgesaugt und mit heißer 1 %iger Kalilauge bis zum farblosen Ablauf gewaschen. Anschließend wird der Pigmentdispergator mit Wasser neutral gewaschen und bei 80 °C getrocknet.

Man erhält 11,7 Teile Pigmentdispergator der Formel (VIII).

| | | | | |
|---|---|---|---|---|
| Analyse | Ber.: 74,0 %C, | 5,0 %H, | 8,4 %N, | 12,7 %O |
| | Gef.: 74,5 %C, | 5,3 %H, | 8,3 %N, | 12,9 %O |

### Beispiel 4a

19 Teile des Perylenpigments C.I. Pigment Red 149 (C.I. No. 71 137) werden mit 1 Teil Pigmentdispergator der Formel (VIII), hergestellt gemäß Beispiel 4, mechanisch gemischt.

Man erhält eine Pigmentzubereitung, die im AM-Lack transparente und farbstarke Lackierungen liefert. Die Dispergierbarkeit ist sehr gut.

### Beispiel 5

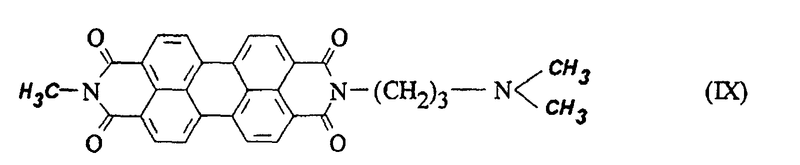

In einem Rührgefäß werden 785 Teile Wasser vorgelegt und unter Rühren 50 Teile Perylen-3,4,9,10-tetracarbonsäuremonoanhydridmono-N',N'dimethylaminopropylimid in Form des feuchten Filterkuchens eingetragen und auf 0 bis 5 °C abgekühlt. In diese Suspension werden während 10 Minuten bei 0 bis 5 °C 83, 9 Teile einer 40 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung von 28,3 Teilen wasserfreiem Calciumchlorid in 94,3 Teilen Wasser zugetropft und 1 Stunde bei 0 bis 5 °C gerührt. Die Suspension wird auf etwa 75 °C erhitzt und 2 Stunden bei 75 °C bis zur Beendigung der Ringschlußreaktion gerührt. Nach dem Abkühlen auf 50 °C wird bei dieser Temperatur 98 %ige Ameisensäure zugetropft, bis ein pH-Wert von 7 erreicht ist. Es wird 1/2 Stunde bei 50 °C gerührt, der erhaltene Pigmentdispergator abgesaugt und mit Wasser chlorionenfrei gewaschen.

Man erhält 181,4 Teile eines Filterkuchens, 25,2 %ig an Pigmentdispergator der Formel (IX).

| | |
|---|---|
| Analyse | Ber.: 8,6 %N |
| | Gef.: 8,1 %N |

Das ¹H- und das ¹³C- NMR-Spektrum stimmen mit der oben angegebenen Strukturformel überein.

### Beispiel 5a

In einem Rührgefäß werden 1030 Teile Wasser vorgelegt und unter Rühren 140,6 Teile eines Preßkuchens, 32,4 %ig an Perylen-3,4,9,10-tetracarbonsäuredianhydrid, eingetragen. Nach Abkühlung auf 0 bis 5 °C werden während 10 Minuten 94,4 Teile einer 40,0 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung von 25,5 Teilen wasserfreiem Calciumchlorid in 85 Teilen Wasser zugetropft und 1 Stunde bei 0 bis 5 °C gerührt. Die Suspension wird auf 80 °C erhitzt und 1 Stunde bei 80 °C bis zur Beendigung der Ringschlußreaktion gerührt. Danach wird eine Suspension, bestehend aus 21 Teilen Pigmentdispergator, 25,2 %ig, der Formel (IX), hergestellt gemäß Beispiel 5, und 100 Teilen Wasser, zugegeben. Anschließend werden 166 Teile Isobutanol 100 %ig zugetropft, 2 Stunden bei Siedetemperatur gerührt und dann das Isobutanol bis 100 °C am Übergang abdestilliert. Nach dem Abkühlen auf 50 °C wird bei dieser Temperatur 98 %ige Ameisensäure zugetropft, bis ein pH-Wert von 7 erreicht ist. Es wird 1/2 Stunde bei 50 °C gerührt, das erhaltene Pigment abgesaugt, mit Wasser chlorionenfrei gewaschen und bei 80 °C im Umluftschrank getrocknet.

Man erhält 52,6 Teile Pigmentzubereitung auf Basis von C.I. Pigment Red 179.

Im HS-Lack werden transparente und farbstarke Lackierungen erhalten. Die Metallic-Lackierung ist farbstark und brillant.

### Beispiel 6

In einem Rührgefäß werden 150 Teile N,N-Dimethylaminopropylamin vorgelegt und 10,1 Teile Perylen-3,4,9,10-tetracarbonsäuremonoanhydrid- monomethylimid eingetragen. Anschließend wird auf 125 °C erhitzt und 5 Stunden bei 125 °C gerührt. Nach dem Abkühlen auf 25 °C werden 250 Teile Wasser zugegeben, der Pigmentdispergator abgesaugt und mit Wasser neutral gewaschen. Der Filterkuchen wird in 200 Teile 1 %ige Kalilauge eingetragen, auf 90 °C erhitzt und 1 Stunde bei dieser Temperatur gerührt. Danach wird bei 90 °C abgesaugt und mit heißer 1 %iger Kalilauge bis zum farblosen Ablauf gewaschen. Anschließend wird mit Wasser neutral gewaschen und bei 80 °C getrocknet.

Man erhält 10,4 Teile Pigmentdispergator der Formel (IX).

| | | | | |
|---|---|---|---|---|
| Analyse | Ber.: 73,6 %C, | 4,7 %H, | 8,6 %N, | 13,2 %O |
| | Gef.: 74,3 %C, | 4,6 %H, | 8,4 %N, | 12,6 %O |

### Beispiel 6a

In einem Rührgefäß werden 4600 Teile Wasser vorgelegt und unter Rühren 613,5 Teile eines Filterkuchens, 32,0 %ig an Perylen-3,4,9,10-tetracarbonsäuredianhydrid, eingetragen. Zu dieser Suspension werden 21,4 Teile einer handelsüblichen 50 %igen wäßrigen Harzseife gegeben und, nach Abkühlung auf 0 bis 5 °C, während 10 Minuten 420 Teile einer 40,0 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung von 113,2 Teilen wasserfreiem Calciumchlorid in 377 Teilen Wasser zugetropft und 1 Stunde bei 0 bis 5 °C gerührt. Die Suspension wird auf 80 °C erhitzt und 2 Stunden bei 80 °C bis zur Beendigung der Ringschlußreaktion gerührt. Nach dem Abkühlen auf 50 °C wird bei dieser Temperatur 98 %ige Ameisensäure zugetropft, bis ein pH-Wert von 7 erreicht ist. Es wird 1/2 Stunde bei 50 °C gerührt, das erhaltene Pigment abgesaugt, mit Wasser chlorionenfrei gewaschen und bei 80 °C im Umluftschrank getrocknet.

Man erhält 218 Teile C.I. Pigment Red 179.

9,5 Teile des obigen Pigments werden mit 0,5 Teilen Pigmentdispergator der Formel (IX), hergestellt gemäß Beispiel 6, mechanisch gemischt.

Man erhält eine Pigmentzubereitung auf Basis von C.I. Pigment Red 179, die im AM-Lack transparente und farbstarke Lackierungen liefert. Die Rheologie wird mit 5 bewertet und die Viskosität beträgt 3,5 s. Die Überlackierechtheit ist sehr gut.

Ohne den Zusatz des Pigmentdispergators sind die Lackierungen matt und farbschwach.

### Beispiel 7

In einem Autoklaven werden 1500 Teile Wasser vorgelegt, 101,3 Teile Perylen-3,4,9,10-tetracarbonsäuremonoanhydridmonomethylimid eingetragen und 51,1 Teile N,N-Dimethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt, mit Wasser neutral gewaschen und bei 80 °C getrocknet.

Man erhält 342,5 Teile eines Filterkuchens, 35,3 %ig an Pigmentdispergator der Formel (IX).

| | | | | |
|---|---|---|---|---|
| Analyse | Ber.: 73,6 %C, | 4,7 %H, | 8,6 %N, | 13,1 %O |
| | Gef.: 72,6 %C, | 5,5 %H, | 8,3 %N, | 14,1 %O |

### Beispiel 7a

In einem Autoklaven werden 189 Teile Wasser vorgelegt, 85,9 Teile eines Filterkuchens, 32,0 %ig an Perylen-3,4,9,10-tetracarbonsäuredianhydrid, eingetragen und nacheinander 2,5 Teile einer handelsüblichen 50 %igen wäßrigen Harzseife und 27,5 Teile wäßrige Ammoniaklösung 25,0 %ig zugegeben. Anschließend wird unter Druck auf 130 °C erhitzt und 3 Stunden bei 130 °C gerührt. Nach dem Abkühlen auf 25 °C wird durch Zugabe von 20,0 Teilen 10 %iger Salzsäure ein pH-Wert von 1,5 eingestellt. Danach wird das Pigment abgesaugt und mit Wasser neutral gewaschen.

Man erhält 126,5 Teile eines Filterkuchens, 23,2 %ig an Pigment C.I. Pigment Violet 29 (C.I. No. 71 129).

38,6 Teile dieses Filterkuchens und 2,8 Teile eines Filterkuchens, 35,3 %ig an Pigmentdispergator der Formel (IX), hergestellt gemäß Beispiel 7, werden gemischt und bei 80 °C getrocknet. Man erhält 10 Teile Pigmentzubereitung.

Im AM-Lack werden deckende und farbstarke Lackierungen erhalten. Die Rheologie wird mit 5 bewertet und die Viskosität beträgt 4,0 s.

### Beispiel 7b

In einem Rührgefäß werden 1141 Teile Wasser vorgelegt und nacheinander unter Rühren 148,4 Teile eines 32 %igen Filterkuchens von Perylen-3,4,9,10-tetracarbonsäuredianhydrid und 10,7 Teile eines 23,4 %igen Filterkuchens von Perylen-3,4,9,10-tetracarbonsäuremonoanhydridmono-N, N-dimethylaminopropylimid eingetragen. Die Suspension wird auf 0 bis 5 °C abgekühlt und bei dieser Temperatur während 10 Minuten 104,9 Teile einer 40,0 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung aus 28,3 Teilen wasserfreiem Calciumchlorid in 94,3 Teilen Wasser zugetropft und 1 Stunde bei 0 bis 5 °C gerührt. Die Suspension wird auf 80 °C erhitzt und 1 Stunde bei 80 °C bis zur Beendigung der Ringschlußreaktion gerührt. Nach dem Abkühlen auf 50 °C wird bei dieser Temperatur 98 %ige Ameisensäure zugetropft, bis ein pH-Wert von 7 erreicht ist. Es wird 1/2 Stunde bei 50 °C gerührt, die erhaltene Pigmentzubereitung abgesaugt, mit Wasser chlorionenfrei gewaschen und bei 80 °C im Umluftschrank getrocknet.

Man erhält 53,0 Teile Pigmentzubereitung auf Basis von C.I. Pigment Red 179. Der Pigmentdispergator in der Pigmentzubereitung besitzt die Struktur der Formel (IX). Im PUR-Lack werden transparente und farbstarke Lackierungen erhalten.

### Beispiel 7c

In einem Rührgefäß werden 1144 Teile Wasser vorgelegt und unter Rühren 156,3 Teile eines 32 %igen Filterkuchens von Perylen-3,4,9,10-tetracarbonsäuredianhydrid und 4,5 Teile einer wäßrigen Lösung des Natriumsalzes eines Alkylschwefelsäurehalbesters (Wirkstoffgehalt 28 %) zugegeben. Die Suspension wird auf 0 bis 5 °C abgekühlt und bei dieser Temperatur während 10 Minuten 104,9 Teile einer 40,0 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung aus 28,3 Teilen wasserfreiem Calciumchlorid in 94,3 Teilen Wasser zugetropft und 1 Stunde bei 0 bis 5 °C gerührt. Danach werden 7,1 Teile eines 35,3 %igen Filterkuchens von Pigmentdispergator der Formel (IX), hergestellt gemäß Beispiel 7, zugegeben. Es wird noch 15 Minuten bei 0 bis 5 °C gerührt. Die Suspension wird auf 80 °C erhitzt und 1 Stunde bei 80 °C bis zur Beendigung der Ringschlußreaktion gerührt. Danach werden 2,5 Teile Bariumsulfat zugegeben und 1 Stunde bei 80 °C gerührt. Nach dem Abkühlen auf 50 °C wird bei dieser Temperatur 98 %ige Ameisensäure zugetropft, bis ein pH-Wert von 7 erreicht ist. Es wird 1/2 Stunde bei 50 °C gerührt, die erhaltene Pigmentzubereitung abgesaugt, mit Wasser chlorionenfrei gewaschen und bei 80 °C im Umluftschrank getrocknet. Man erhält 59,1 Teile einer Pigmentzubereitung auf Basis von C.I. Pigment Red 179.

Im AM-Lack werden deckende und farbstarke Lackierungen erhalten. Die Rheologie wird mit 5 bewertet und die Viskosität beträgt 4,8 s.

### Beispiel 7d

In einem Rührgefäß werden 524 Teile Wasser vorgelegt und unter Rühren 70,1 Teile Filterkuchen Perylen-3,4,9,10-tetracarbonsäuredianhydrid 32,5 %ig eingetragen. Zu dieser Suspension werden 2,5 Teile einer handelsüblichen 50 %igen wäßrigen Harzseife gegeben und, nach Abkühlung auf 0 bis 5 °C, während 10 Minuten 48,0 Teile einer 40,0 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung von 12,9 Teilen wasserfreiem Calciumchlorid in 43,1 Teilen Wasser zugetropft und 1 Stunde bei 0 bis 5 °C gerührt. Die Suspension wird auf 80 °C erhitzt und 2 Stunden bei 80 °C bis zur Beendigung der Ringschlußreaktion gerührt. Nach dem Abkühlen auf 50 °C wird bei dieser Temperatur 98 %ige Ameisensäure zugetropft, bis ein pH-Wert von 7 erreicht ist. Danach werden nacheinander 3,5 Teile eines 35,3 %igen Filterkuchens von Pigmentdispergator der Formel (IX), hergestellt gemäß Beispiel 7, 11,4 Teile eines 10,9 %igen Filterkuchens von C.I. Pigment Violet 29, hergestellt durch Umfällung aus konzentrierter Schwefelsäure, und 75 Teile Isobutanol 100 %ig zugegeben. Es wird zum Sieden erhitzt und 2 Stunden bei Siedetemperatur gerührt. Dann wird das Isobutanol bis 100 °C am Übergang azeotrop abdestilliert. Nach dem Abkühlen auf 50 °C wird die erhaltene Pigmentzubereitung abgesaugt, mit Wasser chlorionenfrei gewaschen und bei 80 °C im Umluftschrank getrocknet.

Man erhält 27,6 Teile einer Pigmentzubereitung auf Basis von C.I. Pigment Red 179 und C.I. Pigment Violet 29. Im AM-Lack werden transparente und farbstarke Lackierungen mit tiefem Farbton erhalten. Die Rheologie wird mit 5 bewertet und die Viskosität beträgt 4,8 s.

### Beispiel 7e

In einem Rührgefäß werden 1170 Teile Wasser vorgelegt und unter Rühren 140,6 Teile eines 32 %igen Preßkuchens von Perylen-3,4,9,10-tetracarbonsäuredianhydrid, 50 Teile Perylen-3,4,9,10-tetracarbonsäuremonoanhydridmonoimid (25 %ig) und 5,3 Teile einer handelsüblichen 50 %igen wäßrigen Harzseife eingetragen. Nach Abkühlung auf 0 bis 5 °C werden während 10 Minuten 94,4 Teile einer 40,0 %igen wäßrigen Monomethylaminlösung zugetropft. Es wird noch 15 Minuten bei 0 bis 5 °C gerührt. In die hierbei entstandene Lösung wird während 15 Minuten bei 0 bis 5 °C eine Lösung von 25,5 Teilen wasserfreiem Calciumchlorid in 94 Teilen Wasser zugetropft und 1 Stunde bei 0 bis 5 °C gerührt. Die Suspension wird auf 80 °C erhitzt und 1 Stunde bei 80 °C bis zur Beendigung der Ringschlußreaktion gerührt. Bei dieser Temperatur wird 98 %ige Ameisensäure zugetropft, bis ein pH-Wert von 7 erreicht ist. Danach werden 2,8 Teile Pigmentdispergator der Formel (IX), hergestellt gemäß Beispiel 7 zugegeben. Anschließend werden 168 Teile Isobutanol 100 %ig zugetropft, 2 Stunden bei Siedetemperatur gerührt und dann das Isobutanol bis 100 °C am Übergang abdestilliert. Es wird 1/2 Stunde bei 50 °C gerührt, die erhaltene Pigmentzubereitung abgesaugt, mit Wasser chlorionenfrei gewaschen und bei 80 °C im Umluftschrank getrocknet.

Man erhält 59,1 Teile Pigmentzubereitung auf Basis von Pigment Red 179. Im AM-Lack werden transparente Lackierungen mit marronem Farbton erhalten.

### Beispiel 7f

3,42 Teile C.I. Pigment Violet 19, β-Phase und 0,18 Teile Pigmentdispergator der Formel (IX), hergestellt gemäß Beispiel 7, werden nacheinander in 26,4 Teile eines 35 %igen aromatenhaltigen Alkydmelaminharzlacks (AM-Lack) eingetragen und mit 85 Teilen Glasperlen vom Durchmesser 3 mm in einem Kunststoffbecher auf einem Paintshaker 60 Minuten dispergiert. Danach werden 60 Teile Auflackgemisch zugegeben und 3 Minuten auf dem Paintshaker dispergiert. Anschließend wird der Volltonlack von den Mahlkörpern abgesiebt.
Man erhält transparente und farbstarke Lackierungen mit sehr gutem Glanz.

### Beispiel 8

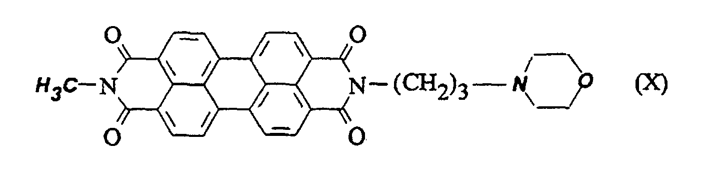

In einem Rührgefäß werden 95 Teile N-3-Aminopropylmorpholin vorgelegt und danach 5,1 Teile Perylen-3,4,9,10-tetracarbonsäuremonoanhydrid- monomethylimid eingetragen. Anschließend wird auf 150 °C erhitzt und 1 Stunde bei 150 °C gerührt. Danach wird auf 100 °C abgekühlt und 100 Teile Wasser zugegeben. Nach dem Abkühlen auf 60 °C wird der Pigmentdispergator abgesaugt, mit Wasser neutral gewaschen und bei 80 °C getrocknet.
Man erhält 6,5 Teile Pigmentdispergator der Formel (X).

| | | | | |
|---|---|---|---|---|
| Analyse | Ber.: 72,3 %C, | 4,7 %H, | 7,9 %N, | 15,0 %O |
| | Gef.: 71,9 %C, | 3,8 %H, | 8,0 %N, | 14,6 %O |

Das ¹H- und das ¹³C- NMR-Spektrum stimmen mit der oben angegebenen Strukturformel überein.

### Beispiel 8a

9,5 Teile des Chinacridon-Pigments C.I. Pigment Violet 19 werden mit 0,5 Teilen Pigmentdispergator der Formel (X), hergestellt gemäß Beispiel 8, mechanisch gemischt.

Man erhält eine Pigmentzubereitung, die im AM-Lack transparente und farbstarke Lackierungen liefert. Die Rheologie wird mit 5 bewertet und die Viskosität beträgt 4,9 s.

### Beispiel 9

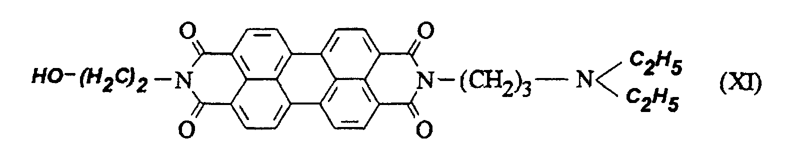

In einem Autoklaven werden 348 Teile Wasser vorgelegt, 17,4 Teile Perylen-3,4,9,10-tetracarbonsäuremonoanhydridmonohydroxyethylimid eingetragen und 10,5 Teile N,N-Diethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen. Der Filterkuchen wird in 400 Teile 1 %ige Kalilauge eingetragen, auf 90 °C erhitzt und 1 Stunde bei dieser Temperatur gerührt. Danach wird bei 90 °C abgesaugt und mit heißer 1 %iger Kalilauge bis zum farblosen Ablauf gewaschen. Anschließend wird mit Wasser neutral gewaschen und bei 80 °C getrocknet.

Man erhält 18,0 Teile Pigmentdispergator der Formel (XI).

| | | | | |
|---|---|---|---|---|
| Analyse | Ber.: 72,4 %C, | 5,3 %H, | 7,7 %N, | 14,6 %O |
| | Gef.: 72,5 %C, | 5,4 %H, | 7,8 %N, | 14,6 %O |

Das ¹H- und das ¹³C- NMR-Spektrum stimmen mit der oben angegebenen Strukturformel überein.

### Beispiel 9a

19 Teile Pigment, hergestellt gemäß Beispiel 6a und 1 Teil Pigmentdispergator der Formel (XI), hergestellt gemäß Beispiel 9, werden mechanisch gemischt.

Man erhält eine Pigmentzubereitung auf der Basis von C.I.Pigment Red 179, die im PUR-Lack transparente und farbstarke Lackierungen liefert. Die Metallic-Lackierungen sind brillant und farbstark. Im PE-Lack werden transparente und farbstarke Lackierungen erhalten. Die Metallic-Lackierungen sind auch hier farbstark.

### Beispiel 10

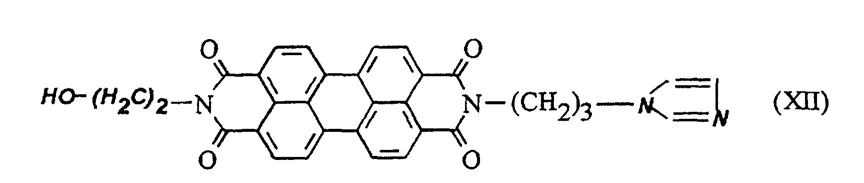

In einem Autoklaven werden 348 Teile Wasser vorgelegt, 17,4 Teile Perylen-3,4,9,10-tetracarbonsäuremonoanhydridmonohydroxyethylimid eingetragen und 10,0 Teile 1-(3-Aminopropyl)-imidazol zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen. Der Filterkuchen wird in 500 Teile Wasser eingetragen, durch Zugabe von 0,4 Teilen 10 %iger Natronlauge auf pH 8-9 gestellt, auf 90 °C erhitzt und 1 Stunde bei dieser Temperatur gerührt. Danach wird der Pigmentdispergator bei 90 °C abgesaugt, mit Wasser neutral gewaschen und bei 80 °C getrocknet.

Man erhält 21,1 Teile Pigmentdispergator der Formel (XII).

| | | | | |
|---|---|---|---|---|
| Analyse | Ber.: 70,9 %C, | 4,1 %H, | 10,3 %N, | 14,8 %O |
| | Gef.: 71,7 %C, | 4,2 %H, | 10,0 %N, | 15,4 %O |

Das ¹H- und das ¹³C- NMR-Spektrum stimmen mit der oben angegebenen Strukturformel überein.

### Beispiel 10a

9,5 Teile C.I. Pigment Violet 19 werden mit 0,5 Teilen Pigmentdispergator der Formel (XII), hergestellt gemäß Beispiel 10, mechanisch gemischt.

Man erhält eine Pigmentzubereitung, die im AM-Lack transparente und farbstarke Lackierungen liefert. Die Rheologie wird mit 5 bewertet und die Viskosität beträgt 5,2 s. Im PUR-Lack werden transparente und farbstarke Lackierungen erhalten. Die Metalliclackierungen sind brillant und farbstark.

### Beispiel 10b

19 Teile C.I. Pigment Red 179, hergestellt gemäß Beispiel 6a, 0,5 Teile Pigmentdispergator der Formel (XII), hergestellt gemäß Beispiel 10 und 0,5 Teile Pigmentdispergator der Formel (IX), hergestellt gemäß Beispiel 6, werden mechanisch gemischt.

Man erhält eine Pigmentzubereitung, die im AM-Lack transparente und farbstarke Lackierungen liefert. Die Rheologie wird mit 5 bewertet und die Viskosität beträgt 3,4 s. Die Überlackierechtheit ist sehr gut. Im PUR-Lack werden transparente und farbstarke Lackierungen erhalten.

## Patentansprüche

1. Pigmentzubereitung, **gekennzeichnet durch** einen Gehalt an
a) mindestens einem organischen Pigment aus der Klasse der Perylen-, Perinon-, Chinacridon-, Azo-, Benzimidazolon-, Anthrachinon- oder Anthanthronpigmente und
b) mindestens einem Pigmentdispergator der allgemeinen Formel (I), 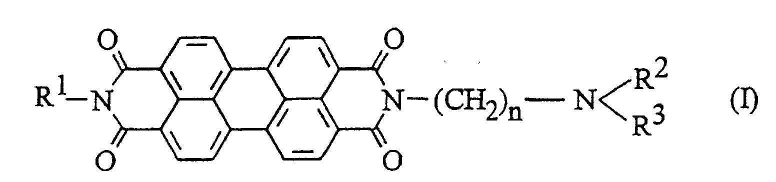
in welcher
R¹ ein Wasserstoffatom, Hydroxy, Amino oder eine Alkylgruppe mit 1 bis 8 Kohlenstoffatomen, die **durch** 1 bis 4 Chlor- oder Bromatome, eine Phenyl-, Cyan-, Hydroxy-, Carbamoyl-, C₂-C₄-Acyl- oder C₁-C₄-Alkoxygruppe substituiert sein kann oder perfluoriert oder teilfluoriert ist;
R² und R³ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, C₂-C₄-Acyl oder C₁-C₄-Alkoxy sein können, oder R² und R³ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und
n eine Zahl von 1 bis 6 ist.

2. Pigmentzubereitung nach Anspruch 1, **dadurch gekennzeichnet, daß**
R¹ ein Wasserstoffatom, Benzyl, eine C₁-C₆-Alkylgruppe oder eine durch 1 bis 2 Substituenten aus der Gruppe Hydroxy, Acetyl, Methoxy, Ethoxy, Chlor und Brom substituierte C₂-C₆-Alkylgruppe;
R² und R³ unabhängig voneinander ein Wasserstoffatom, eine C₁-C₆-Alkylgruppe, eine durch 1 bis 2 Substituenten aus der Gruppe Hydroxy, Acetyl, Methoxy, Ethoxy, Chlor und Brom substituierte C₁-C₆-Alkylgruppe, oder R² und R³ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden, und
n die Zahl 2 oder 3 ist.

3. Pigmentzubereitung nach Anspruch 1 oder 2, **dadurch gekennzeichnet, daß**
R¹ eine Methyl- oder Ethylgruppe,
R² und R³ jeweils eine Methyl- oder Ethylgruppe und
n die Zahl 3 ist.

4. Pigmentzubereitung nach Anspruch 1 oder 2, **dadurch gekennzeichnet, daß**
R¹ ein Wasserstoffatom oder eine Hydroxyethylengruppe,
R² und R³ jeweils eine Methyl- oder Ethylgruppe, oder R² und R³ zusammen mit dem angrenzenden Stickstoffatom einen Imidazolyl- oder Morpholinylrest bilden, und
n die Zahl 3 ist.

5. Pigmentzubereitung nach mindestens einem der Ansprüche 1 bis 4, bestehend aus
a) 99,5 bis 80 Gew.-% mindestens eines organischen Pigments aus der Klasse der Perylen-, Perinon-, Chinacridon-, Benzimidazolon-, Azo-, Anthrachinon- oder Anthanthronpigmente,
b) 0,5 bis 20 Gew.-%, vorzugsweise 1 bis 10 Gew.-%, mindestens einer Perylenverbindung der Formel (I),
c) 0 bis 10 Gew.-% oberflächenaktiven Mitteln und
d) 0 bis 10 Gew.-% an üblichen Zusatzstoffen,
wobei die Anteile der jeweiligen Komponenten auf das Gesamtgewicht der Zubereitung (100 Gew.-%) bezogen sind.

6. Verfahren zur Herstellung einer Pigmentzubereitung nach einem oder mehreren der Ansprüche 1 bis 5, **dadurch gekennzeichnet, daß** man den Pigmentdispergator der Formel (I) und das organische Pigment an einem beliebigen Zeitpunkt ihres Herstellungsprozesses aufeinander einwirken läßt.

7. Verfahren nach Anspruch 6, **dadurch gekennzeichnet, daß** der Pigmentdispergator der Formel (I) vor oder während der Pigmentsynthese, vor oder während eines Feinverteilungsprozesses des Pigments, oder vor, während oder nach einer Lösemittelbehandlung des Pigments zugegeben wird.

8. Verfahren nach Anspruch 6 oder 7, **dadurch gekennzeichnet, daß** der Pigmentdispergator und/oder das organische Pigment in Form eines wasserfeuchten Preßkuchens zusammengegeben werden.

9. Verfahren nach Anspruch 6, **dadurch gekennzeichnet, daß** der Pigmentdispergator und das organische Pigment als trockene Pulver miteinander vermischt werden.

10. Verfahren nach Anspruch 6, **dadurch gekennzeichnet, daß** der Pigmentdispergator und ein organisches Perylenpigment durch Umsetzung von Perylen-3,4,9,10-tetracarbonsäuremonoanhydridmonoimiden der Formeln (II) bzw. (III) 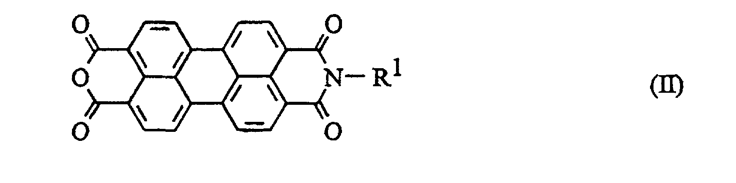 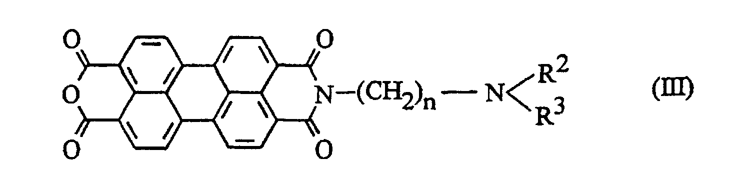 mit einem Amin der allgemeinen Formel (IV) bzw. (V) 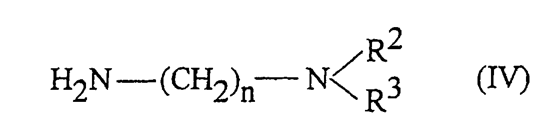
H₂N―R¹ (V)
und worin R¹, R², R³ und n die in Anspruch 1 genannten Bedeutungen haben, als Mischung hergestellt werden.

11. Verwendung der gemäß einem oder mehreren der Ansprüche 1 bis 5 definierten Pigmentzubereitungen als Farbmittel zum Pigmentieren von hochmolekularen organischen Materialien natürlicher oder synthetischer Herkunft in Form plastischer Massen, Schmelzen, Spinnlösungen, Lacken, Ansrichfarben, Tonern oder Druckfarben.

12. Pigmentpräparation, bestehend im wesentlichen aus mindestens einem organischen Pigment aus der Klasse der Perylen-, Perinon-, Chinacridon-, Azo-, Benzimidazolon-, Anthrachinon- oder Anthanthron-Pigmente, mindestens einem Pigmentdispergator der Formel (I) gemäß Anspruch 1, und einem hochmolekularen organischen Material gemäß Anspruch 11.

## Claims

1. A pigment formulation which comprises
a) at least one organic pigment from the class of perylene, perinone, quinacridone, azo, benzimidazolone, anthraquinone or anthanthrone pigments and
b) at least one pigment-dispersing agent of the formula (I), 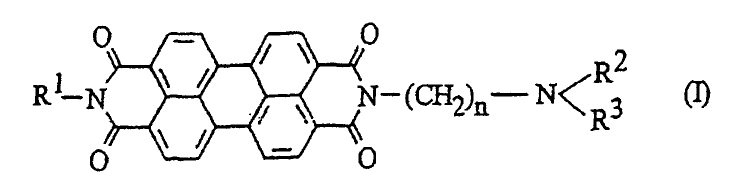 in which
R¹ is a hydrogen atom, hydroxyl, amino or an alkyl group having 1 to 8 carbon atoms, which can be substituted by 1 to 4 chlorine or bromine atoms or a phenyl, cyano, hydroxyl, carbamoyl, C₂-C₄-acyl or C₁-C₄-alkoxy group or is perfluorinated or partly fluorinated;
R² and R³ independently of one another are a hydrogen atom, a substituted or unsubstituted or partly fluorinated or perfluorinated alkyl group having 1 to 20 carbon atoms, or a substituted or unsubstituted or partly fluorinated or perfluorinated alkenyl group having 2 to 20 carbon atoms, it being possible for the substituents to be hydroxyl, phenyl, cyano, chlorine, bromine, C₂-C₄-acyl or C₁-C₄-alkoxy, or R² and R³, together with the N atom, form a saturated, unsaturated or aromatic heterocyclic ring, which optionally contains a further nitrogen, oxygen or sulfur atom in the ring; and
n is a number from 1 to 6.

2. The pigment formulation as claimed in claim 1, wherein
R¹ is a hydrogen atom, benzyl, a C₁-C₆-alkyl group, or a C₂-C₆-alkyl group which is substituted by 1 or 2 substituents selected from the group consisting of hydroxyl, acetyl, methoxy, ethoxy, chlorine and bromine;
R² and R³ independently of one another are a hydrogen atom, a C₁-C₆-alkyl group, or a C₁-C₆-alkyl group which is substituted by 1 or 2 substituents selected from the group consisting of hydroxyl, acetyl, methoxy, ethoxy, chlorine and bromine, or R² and R³, together with the adjacent N atom, form an imidazolyl, piperidinyl, morpholinyl, pipecolinyl, pyrrolyl, pyrrolidinyl, pyrazolyl or piperazinyl ring and
n is the number 2 or 3.

3. The pigment formulation as claimed in claim 1 or 2, wherein
R¹ is a methyl or ethyl group,
R² and R³ are each a methyl or ethyl group and
n is the number 3.

4. The pigment formulation as claimed in claim 1 or 2, wherein
R¹ is a hydrogen atom or a hydroxyethylene group,
R² and R³ are each a methyl or ethyl group, or R² and R³, together with the adjacent nitrogen atom, form an imidazolyl or morpholinyl radical and
n is the number 3.

5. The pigment formulation as claimed in at least one of claims 1 to 4, comprising
a) 99.5 to 80% by weight of at least one organic pigment selected from the class consisting of perylene, perinone, quinacridone, benzimidazolone, azo, anthraquinone or anthanthrone pigments,
b) 0.5 to 20% by weight, preferably 1 to 10% by weight, of at least one perylene compound of the formula (I),
c) 0 to 10% by weight of surface-active agents and
d) 0 to 10% by weight of customary additives,
the proportions of the particular components being based on the total weight of the formulation (100% by weight).

6. A process for the preparation of a pigment formulation as claimed in one or more of claims 1 to 5, which comprises allowing the pigment-dispersing agent of the formula (I) and the organic pigment to act on one another at any desired point in time of its preparation process.

7. The process as claimed in claim 6, wherein the pigment-dispersing agent of the formula (I) is added before or during the pigment synthesis, before or during a fine division process on the pigment, or before, during or after a solvent treatment on the pigment.

8. The process as claimed in claim 6 or 7, wherein the pigment-dispersing agent and/or the organic pigment are brought together in the form of a water-moist press-cake.

9. The process as claimed in claim 6, wherein the pigment-dispersing agent and the organic pigment are mixed with one another as dry powders.

10. The process as claimed in claim 6, wherein the pigment-dispersing agent and an organic perylene pigment are prepared as a mixture by reaction of perylene-3,4,9,10-tetracarboxylic acid monoanhydride monoimides of the formulae (II) and (III) 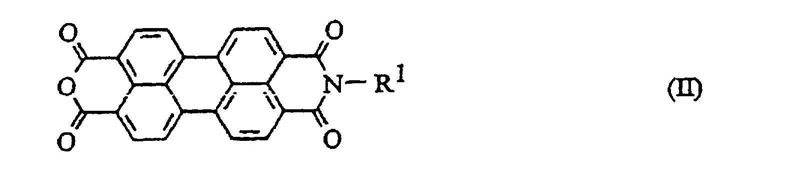 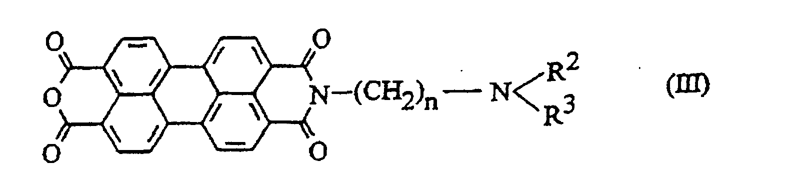 with an amine of the formula (IV) or (V) respectively 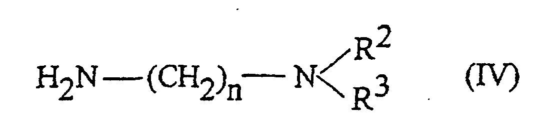
H₂N―R¹ (V)
in which R¹, R², R³ and n have the meanings given in claim 1.

11. The use of a pigment formulation as defined in one or more of claims 1 to 5 as a colorant for pigmenting high molecular weight organic materials of natural or synthetic origin in the form of plastic compositions, melts, spinning solutions, coatings, paints, toners or printing inks.

12. A pigment preparation essentially comprising at least one organic pigment selected from the class consisting of perylene, perinone, quinacridone, azo, benzimidazolone, anthraquinone or anthanthrone pigments, at least one pigment-dispersing agent of the formula (I) as claimed in claim 1 and a high molecular weight organic material as claimed in claim 11.

## Revendications

1. Préparation pigmentaire, **caractérisée par** une teneur en
a) au moins un pigment organique choisi parmi les pigments pérylène, périnone, quinacridone, azoïque, benzimidazolone, anthraquinone ou anthanthrone et
b) au moins un dispersant du pigment de formule générale (I), 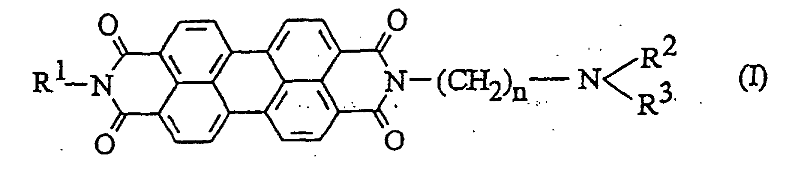
dans laquelle
R¹ représente un atome d'hydrogène, un groupe hydroxy, amino ou alkyle ayant de 1 à 8 atomes de carbone, qui peut être substitué par 1 à 4 atomes de chlore ou de brome, un groupe phényle, cyano, hydroxy, carbamoyle, acyle en C₂ à C₄ ou alcoxy en C₁ à C₄ ou est perfluoré ou partiellement fluoré ;
R² et R³, indépendamment l'un de l'autre, représentent un atome d'hydrogène, un groupe alkyle substitué ou non substitué, partiellement fluoré ou perfluoré ayant de 1 à 20 atomes de carbone, ou un groupe alcényle substitué ou non substitué, partiellement fluoré ou perfluoré ayant de 2 à 20 atomes de carbone, les substituants pouvant être un groupe hydroxy, phényle, cyano, un atome de chlore, brome, un groupe acyle en C₂ à C₄ ou alcoxy en C₁ à C₄, ou R² et R³ forment ensemble avec l'atome N un cycle hétérocyclique saturé, insaturé ou aromatique, qui contient éventuellement un autre atome d'azote, d'oxygène ou de soufre dans le cycle ; et
n est un nombre de 1 à 6.

2. Préparation pigmentaire selon la revendication 1,
**caractérisée en ce que**
R¹ représente un atome d'hydrogène, un groupe benzyle, un groupe alkyle en C₁ à C₆, un groupe alkyle en C₂ à C₆ substitué par 1 à 2 substituants choisis parmi un groupe hydroxy, acétyle, méthoxy, éthoxy, un atome de chlore et de brome ;
R² et R³, indépendamment l'un de l'autre, représentent un atome d'hydrogène, un groupe alkyle en C₁ à C₆, un groupe alkyle en C₁ à C₆ substitué par 1 à 2 substituants choisis parmi un groupe hydroxy, acétyle, méthoxy, éthoxy, un atome de chlore et de brome, ou R² et R³ forment ensemble avec l'atome N voisin un cycle imidazolyle, pipéridinyle, morpholinyle, pipécolinyle, pyrrolyle, pyrrolidinyle, pyrazolyle ou pipérazinyle, et
n est le nombre 2 ou 3.

3. Préparation pigmentaire selon la revendication 1 ou 2, **caractérisée en ce que**
R¹ représente un groupe méthyle ou éthyle,
R² et R³ représentent respectivement un groupe méthyle ou éthyle et
n est le nombre 3.

4. Préparation pigmentaire selon la revendication 1 ou 2, **caractérisée en ce que**
R¹ représente un atome d'hydrogène ou un groupe hydroxyéthylène,
R² et R³ représentent respectivement un groupe méthyle ou éthyle, ou R² et R³ forment ensemble avec l'atome d'azote voisin un groupe imidazolyle ou morpholinyle, et
n est le nombre 3.

5. Préparation pigmentaire selon au moins une des revendications 1 à 4, constituée de
a) 99,5 à 80 % en poids d'au moins un pigment organique choisi parmi les pigments pérylène, périnone, quinacridone, benzimidazolone, azoïque, anthraquinone ou anthanthrone,
b) 0,5 à 20 % en poids, de préférence 1 à 10 % en poids, d'au moins un composé pérylène de formule (I),
c) 0 à 10 % en poids d'agents tensio-actifs et
d) 0 à 10 % en poids d'additifs usuels,
les proportions des composants respectifs étant rapportées au poids total de la préparation (100 % en poids).

6. Procédé pour la fabrication d'une préparation pigmentaire selon une ou plusieurs des revendications 1 à 5, **caractérisé** en qu'on fait agir entre eux le dispersant de pigment de formule (I) et le pigment organique à un moment quelconque de leur procédé de fabrication.

7. Procédé selon la revendication 6, **caractérisé** en que le dispersant de pigment de formule (I) est ajouté avant ou pendant la synthèse de pigment, avant ou pendant un procédé de division fine du pigment, ou avant, pendant ou après un traitement par solvant du pigment.

8. Procédé selon la revendication 6 ou 7, **caractérisé en ce que** le dispersant de pigment et/ou le pigment organique est ajouté au mélange sous la forme d'un gâteau humide de filtre presse.

9. Procédé selon la revendication 6, **caractérisé en ce que** le dispersant de pigment et le pigment organique sont mélangé entre eux sous forme de poudres fines.

10. Procédé selon la revendication 6, **caractérisé en ce que** le dispersant de pigment et un pigment de pérylène organique sont fabriqués sous forme de mélange par réaction de monoanhydrides monoimides d'acide périlène-3,4,9,10-tétracarboxylique des formules (II) ou (III) 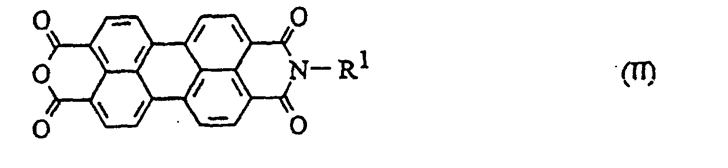 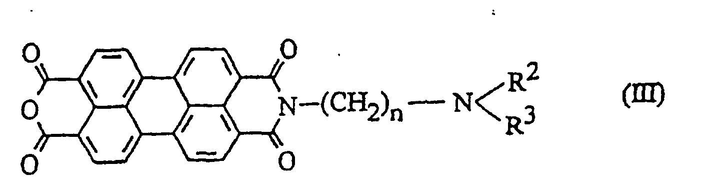 avec une amine de formule générale (IV) ou (V) 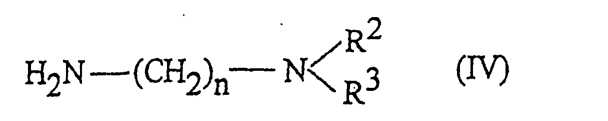
H₂N―R¹ (V)
et dans lesquelles R¹, R², R³ et n ont les significations indiquées à la revendication 1.

11. Utilisation de préparations pigmentaires définies selon une ou plusieurs des revendications 1 à 5 comme colorant pour la pigmentation de matériaux organiques de masse moléculaire élevée d'origine naturelle ou synthétique sous forme de matières plastiques, de matières fondues, de solutions à filer, de peintures, de colorants de peintures, de toners et de colorants d'impression.

12. Préparation pigmentaire, constituée essentiellement d'au moins un pigment organique choisi parmi les pigments pérylène, périnone, quinacridone, azoïque, benzimidazolone, anthraquinone ou anthanthrone, d'au moins un dispersant de pigment de formule (1) selon la revendication 1, et d'un matériau organique de masse moléculaire élevée selon la revendication 11.
